# EUROPEAN PATENT APPLICATION

(11) **EP 1 316 496 A2**
(43) Date of publication of application: **04.06.2003**
(21) Application number: 02026579.9
(22) Date of filing: 28.11.2002
(51) Int. Cl.: B62D 33/04

(54) **Method and device for fastening convergent walls of prefabricated structures, as well as profiled sections which can be fixed at the edges of such walls**

(30) Priority: 28.11.2001 IT PI20010077
(71) Applicant: Manzi, Paolo, 50050 Fucecchio (FI) (IT)
(72) Inventor: Manzi, Paolo, 50050 Fucecchio (FI) (IT)
(74) Representative: Celestino, Marco

(57) **Abstract**

A method for fastening convergent walls of prefabricated, self supported structures, such as those of dwelling modules of vehicles like caravans, auto caravans, motor homes, etc. The walls of such dwelling modules, for example of an auto caravan (1), consisting of boards (7,7') having along their edges a profile (8,8'). After arranging two boards (7,7') at a predetermined angle with said profiled sections parallel and approached, for connecting and fastening them to each other junction elements (2,3) are used that can engage with the profiled grooves (10,10') of the relative profiled sections (8,8'); by tightening each junction element (2,3) in the groove (10,10') the final structure is kept integral and self supported. Furthermore, the use of two section bars, inner and outer (4,5), which are locked rotationally through a spacer element (15,19), complete the assemblage of the whole structure. For application of doors and/or windows, two section bars (23,24) are provided that assembled to each other make the frame of the doors and/or windows same.

## Description

### Field of the invention

The invention described below refers to a method for fastening to each other convergent walls of prefabricated structures, for example self-supported structures, such as vehicles like caravans, auto caravans, motor homes, etc.

The invention has also the object to obtain a structure that can be adapted for such uses, by means of profiled sections that can be fixed at the edges of the walls same for allowing a mutual engagement.

Furthermore, the invention relates to a device that allows to carry out this method, for quickly fastening the many elements of the structure to one another.

### Background of the invention

Special vehicles are available on the market such as caravan, auto caravan, tent trailers, motor homes etc., all made with a durable structure, whose walls have to be connected to each other assuring at the same time the seal to air and water as well as structural resistance.

In particular, humidity infiltrations at the joints are detrimental during the period of not use of the vehicle, when a same side of the vehicle is not exposed to the sun for long periods.

Not only the joints between walls are subject to infiltrations, but also the seals of the window and of the doors that must be suitably protected and must be replaced periodically when they loose elasticity. Further points of penetration of humidity are also the fastening screws of the boards of the walls, used for fastening to the boards profiled sections for protection and junction of the edges.

The known systems normally provide the direct abutment of the edges of two adjacent boards and fixing the junction with glue and screws. The junction is then finished with outer and inner section bars of aluminium that are glued and screwed.

In addition to the problems as above described, there is also the high handicraft work necessary for carrying out the connection and for assuring the seal, both at assembling the bodies of the vehicles and in case of maintenance.

In particular, boards in polystyrene are used coated with sheets of many materials, for allowing a durable connection by means of screws, and such boards must provide a wooden frame at the edges, complex and expensive to make.

### Summary of the invention

It is therefore object of the present invention to provide a method for fastening convergent walls of prefabricated structures that has not the above drawbacks.

It is another object of the present invention to provide a method for making a self supported structure formed by convergent boards that allows, with respect to the prior art, to obtain a structure light, strong, easy to shape and quick to assemble.

It is a further object of the present invention to provide a walls junction system, associated to profiled sections that can be fixed at the edges of the walls same, which allows to carry out the above method.

It is a particular object of the invention to provide junction elements for connecting steadily through quick locking means two or more boards so that they turn out integral and in a predetermined mutual arrangement.

It is another particular object of the invention to provide section bars for allowing the application of doors and windows to a board of the body of a prefabricated structure.

In the following description reference is made to an embodiment of a structure of a dwelling module for vehicles such as caravan, auto caravan, tent trailers, motor homes etc., being it clear that this method can be extended to fixed prefabricated structures.

According to a first aspect of the invention, the method provides the steps of:
- prearranging boards having along an edge at least a profiled groove;
- arranging at least two boards at a predetermined angle, with said grooves parallel and approached to each other;
- connecting said boards to each other, by introducing in said profiled grooves at least a junction element that engages with both;
- locking said or each junction element causing said boards to be integral and self supported.

Preferably, each groove is obtained by means of application of profiled sections having at a side a longitudinal channel suitable for receiving the edges of the boards, integrated to them by glueing, and at the other side the groove same.

Advantageously, each junction element comprises at least two parallel rods connected to each other by transversal portions, said rods having a cross section suitable for engaging in the profiled groove, the rods being fastened in the groove with quick locking means. The profiled groove has advantageously an access opening that is wide as the size of the bars, and an inner undercut portion parallel to the access opening. Each rod of the junction element has at least one locking dog movable between a first position in which it conceals in the rod and a second position in which it protrudes from the surface of each rod. In the first position the locking dog does not impede the free passage of the rod portion through the access opening of the profiled groove, whereas in the second position the locking dog is suitable for positively engaging in the inner undercut portion of the profiled groove. This way the rod is locked in the profiled groove.

Each junction element is alternated advantageously to a spacer element, said spacer element having a profile complementary to the junction elements. Furthermore, the introduction is provided of outer angle section bars located as angle joint between the two profiled sections of said boards and suitable for closing the uncovered portion of surface set between the boards same. The introduction is also provided of inner angle section bars, which through the aid of the spacer element allows the inner angle section bars to be tightened to the outer angle section bars, the locking force tightening the boards towards each other for seal.

Finally, for providing a frame for doors and windows in a board, for each edge of the opening made in the board two complementary section bars are provided suitable for forming a composite bar section along all the edges.

### Brief description of the drawings

Further features of the present invention will be made clearer with the following description of an embodiment thereof, exemplifying but not limitative, with reference to the attached drawings, wherein:
- figure 1 shows a diagrammatical view of an auto caravan;
- figure 2 shows a perspective view of two convergent boards, to each of which a grooved profile is mounted, and shows, furthermore, a junction element;
- figures 3A and 3B show in two different views, respectively from the outside and the inside, the step of introducing the junction element into the grooves;
- figure 4 shows a perspective view of two boards having grooved sections connected and locked to each other by a junction element;
- figures 5 and 6 show respectively the application onto grooved section bars of an outer angle bar section and of an inner angle bar section;
- figure 7 shows a perspective view of a spacer element;
- figures 8A and 8B show a cross sectional view of respectively a spacer element and a junction element mounted on two profiled sections, as well as the outer and inner angle section bars;
- figure 9 shows a junction element with three axes;
- figure 10 shows a perspective view of a spacer element, in addition to the junction element of figure 9, which can be fixed to three convergent walls;
- figures 11A and 11B show respectively a cross sectional view of the spacer element of figure 10 and the junction element of figure 9 mounted to three profiles, with plane outer sections and two inner angle section bars;
- figure 12 shows a perspective view of the assembled structure of the three boards of figures 11a and 11b;
- figures 13A and 13B show a cross sectional view of section bars for a frame for application of doors and/or windows.

### Description of a preferred embodiment

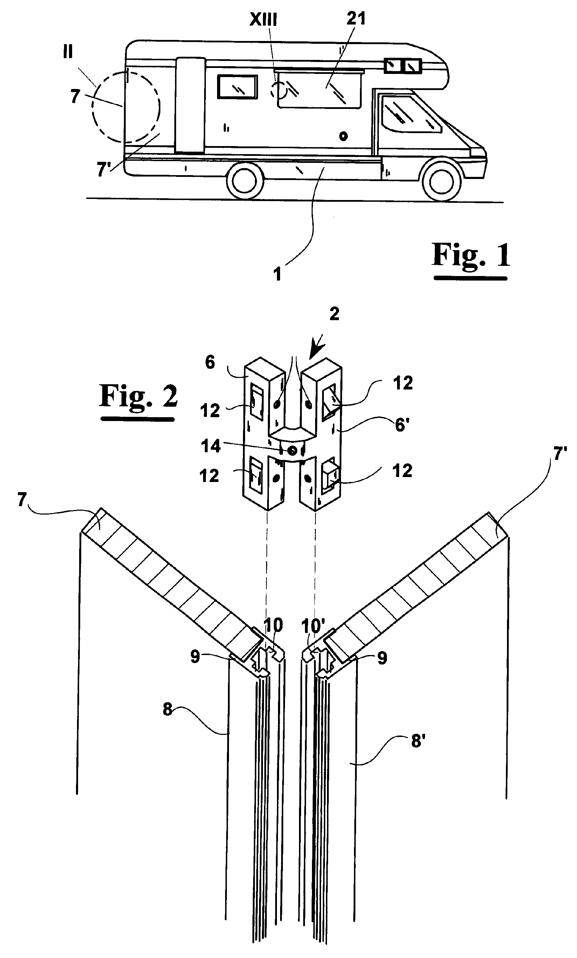

With reference to figure 1, for making convergent walls of prefabricated structures, such as those of an auto caravan 1 in the zone indicated as II, boards 7 and 7' are used.

In particular, to at least one edge of the boards 7 and 7' profiled sections 8 and 8' are applied, which have (figure 2) longitudinal channels 9, 9' that accommodate the respective boards 7, 7', creating an integral body portion, by means of glueing and pressing. Furthermore, profiled sections 8 and 8' have profiled grooves 10, 10', which allow the introduction of junction elements 2, as well as inner/outer coating section bars having also connecting function, and described hereinafter. Therefore, the junction II of figure 1 can be obtained arranging at a predetermined angle boards 7 and 7' with grooves 10 and 10' approached to each other and parallel, connected to each other by introducing into the grooves same junction elements 2, each of which is tightened thus causing the boards 7 and 7' to be integral to each other, self supported and steady.

More precisely, each junction element 2 has at least two parallel rods, 6 and 6', connected to each other by a transversal portion and having a cross section such that they can fit in the profiled grooves 10 and 10' and can be fastened therein by means of quick locking means.

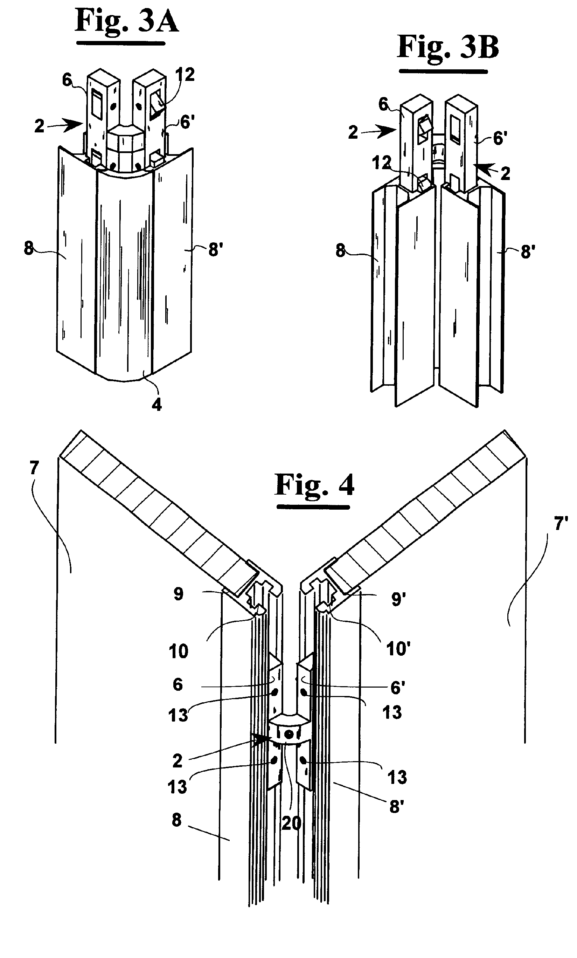

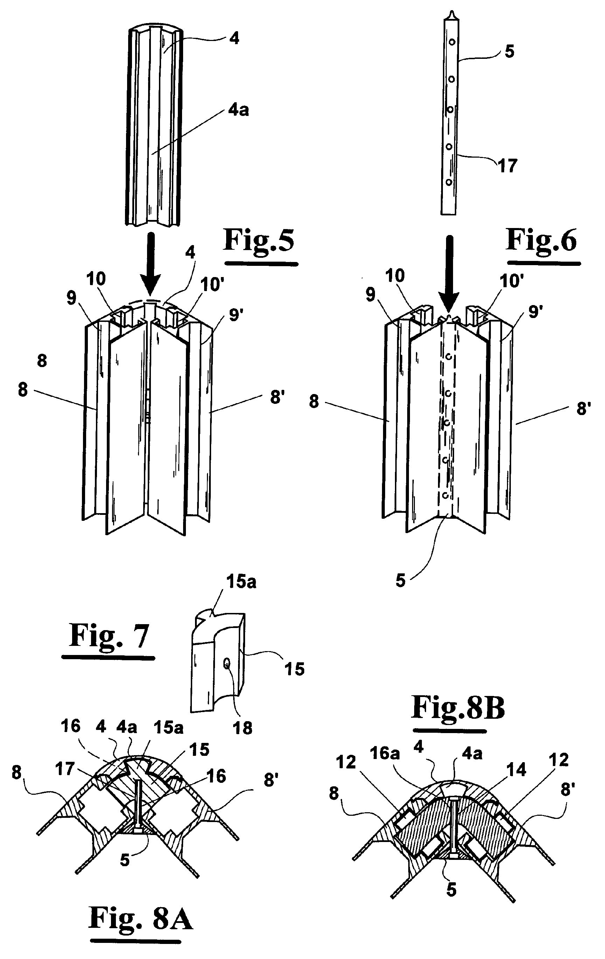

In particular profiled grooves 10 and 10' have a access opening that is wide as the size of rods 6 and 6'. Each rod 6 and 6' comprises at least a locking dog 12 movable between a first position wherein said locking dog conceals in each rod 6 and 6', and a second position wherein said locking dog protrudes from the surface of each rod 6 and 6'. Therefore, in the first position locking dogs 12 do not impede the free access of rods 6 and 6' into profiled grooves 10 and/or 10', whereby, once achieved the predetermined height, junction element 2 is locked in profiled grooves 10 and 10'. In fact, by manually operating locking dogs 12, with a rotational movement on each of them, by means of socket head screws 13, junction element 2 is fastened to the boards 7 and/or 7'. In particular, with reference to figure 4 and 8B, locking dog 12 is rotated by socket head screw 13 up to becoming perpendicular to the axis of rods 6 and 6'. In said position, junction element 2 is prevented from moving out profiled grooves 10 and/or 10'.

The steps for assembling the angled connection II of figure 1 can be described as follows. Two boards 7 and 7' having the profiled sections 8 and 8' (figure 2) are positioned at a predetermined angle.

Boards 7 and 7' are connected to each other, by introducing junction elements 2 into profiled grooves 10 and 10' (figure 3A and 3B), obtaining a mutual engagement with both grooves 10 and 10'. For example, if the height of boards 7 and 7' is set at 200 cm, their connection is obtained by three/five junction elements 2 alternated to spacer elements 15 (figures 7 and 8A). The latter have dove tailed connections 15A that can be inserted for sliding in a outer bar section 4 equipped with dove tailed housing 4a. In fact, for closing and further completing the structure formed by boards 7 and 7' connected by junction elements 2, outer bar sections 4 and inner bar sections 5 are used (figure 5,6, 8A and 8B).

In particular, as shown in figure 8B, a bolt 16a engages in a hole 14 passing through the central portion of junction element 2 (figure 2), tightening it steadily. Furthermore, with reference to figures 3A,5 and 8A, the use of outer section bar 4 allows to close the uncovered outer surface set between the two profiled grooved sections 8 and 8'. Inner angle section bar 5 has holes 17, at predetermined distances that allow, through bolts 16, to block spacer element 15, previously inserted, to outer bar section 4, that has a screw threaded blind hole 18. This way, by tightening bolt 16, spacer element 15 pulls also outer angle section bar 4 by dove tailed 15a part that engages groove 4a, assuring a safe locking between all the sections.

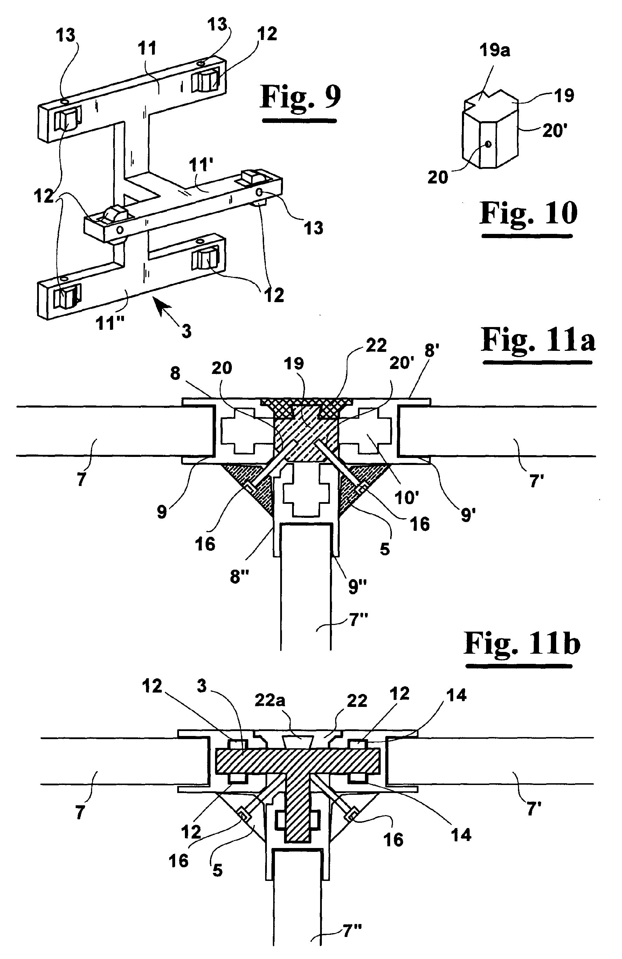

With reference to figures 9, 10 11A and 11B, for connecting three walls 7, 7' and 7", a junction element can be used having three parallel rods 11, 11' and 11'', with corresponding locking dogs 12 movable by means of socket head screws 13. Each rod 11, 11' and 11'' is put in the corresponding profiled grooves 10, 10', 10''. Also in this case a spacer element 19 is provided in which two screw threaded holes are made 20 and 20'. Through such holes bolts 16 are fastened, running also through holes 17 of inner angle section bars 5, thus tightening outer angle section bar 22 to two inner angle section bars 5. In particular, spacers 19 have dove tailed protrusions 19a that engage with grooves 22a, similarly as described above.

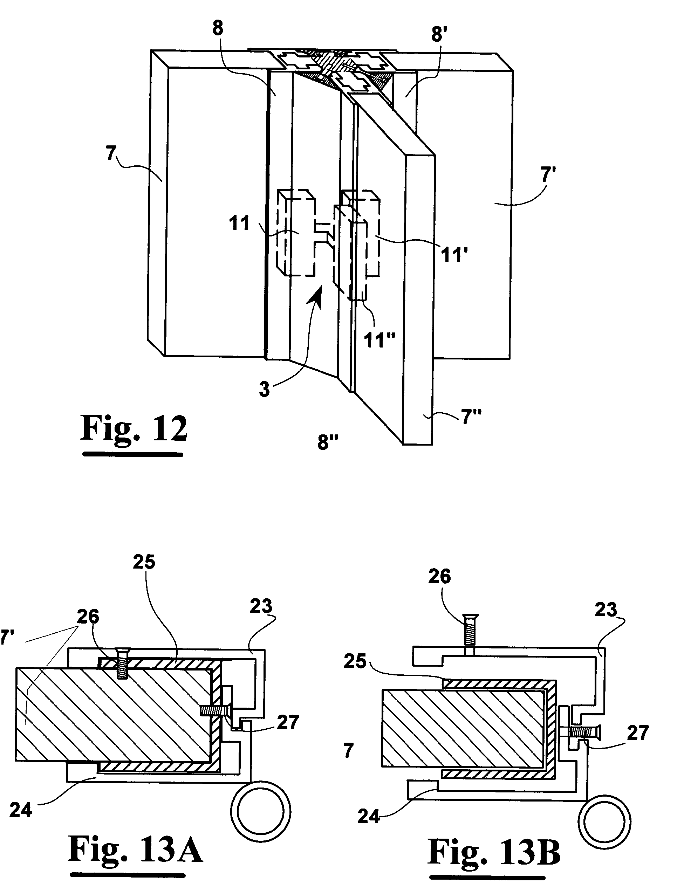

According to another aspect of the invention, for fitting a door o window 21 into an opening made in board 7' (zone XIII) of the body of the auto caravan of figure 1, with reference to figure 13, the use is provided of two section bars 23 and 24 applied to an "U" shaped section bar 25 made of galvanized sheet iron.

Section bar 25 is mounted to board 7 peripherally along the aperture for fitting the door or window. Section bars 23 and 24, in particular, represents the frame of the door and window of the auto caravan. For allowing a window or a door to be mounted, two section bars 23 and 24 must be assembled to each other. In particular, section bar 24 is connected to board 7', through self-tapping screws 27, which penetrate section bar 25 and then board 7', fastening section bar 24 to the board same. Then, in the same way, by self-tapping screws 26 section bar 23 is fixed. In particular, section bar 23 has a portion of its surface that engages in a special housing of section bar 24, whereby the two section bars are connected to each other and to board 7'.

The foregoing description of a specific embodiment will so fully reveal the invention according to the conceptual point of view, so that others, by applying current knowledge, will be able to modify and/or adapt for various applications such an embodiment without further research and without parting from the invention, and it is therefore to be understood that such adaptations and modifications will have to be considered as equivalent to the specific embodiment. The means and the materials to realise the different functions described herein could have a different nature without, for this reason, departing from the field of the invention. It is to be understood that the phraseology or terminology employed herein is for the purpose of description and not of limitation.

## Claims

1. A method for fastening convergent walls of prefabricated structures, in particular suitable to provide dwelling modules for vehicles, **characterised in that it provides** the steps of:
- prearranging boards (7, 7') having along an edge at least a profiled groove (10, 10');
- arranging at least two boards (7, 7') at a predetermined angle and with said grooves (10, 10') parallel and approached to each other;
- connecting said boards (7, 7') to each other, introducing into said profiled grooves (10, 10') at least a junction element (2) that engages with both grooves;
- locking said or each junction element (2) causing said boards (7, 7') to become a single, self supported and compact body portion.

2. Method according to claim 1, **characterised in that** the profiled grooves (10, 10') of said boards (7, 7') are obtained by applying at the edges of said boards (7, 7') profiled sections (8, 8') having at one side a longitudinal channel (9, 9'), suitable for receiving said boards (7, 7') and becoming integral with them, and at the other side said profiled grooves (10, 10').

3. Method according to claim 2, wherein said or each junction element (2) comprises at least two rods (6, 6') parallel to each other connected by transversal portions, said rods having (6, 6') a size in the cross section suitable for engaging in said profiled grooves (10, 10'), said rods (6, 6') being fastened in said profiled grooves (10, 10') by quick locking means.

4. Method according to claim 2, wherein said profiled grooves (10, 10') have an access opening, which is wide as the size of said rods (6, 6'), and an inner undercut portion, that is parallel to said access opening, each rod (6, 6') of said junction element (2) comprising at least a locking dog (12) movable between a first position in which said locking dog (12) conceals in each rod (6, 6') and a second position in which said locking dog (12) protrudes from the surface of each rod (6, 6'), wherein in said first position said locking dog (12) does not impede the free passage of said rod (6, 6') through the access opening of said profiled groove (10, 10'), in said second position said locking dog (12) is suitable for positively engaging in said inner undercut portion of said profiled groove (10, 10'), whereby said rod (6, 6') is locked in said profiled groove (10, 10').

5. Method according to claim 2, wherein each junction element (2) is alternated to a spacer that has a profile complementary to said junction elements (2).

6. Method according to claim 2, wherein between a junction element (2) between two boards (7, 7') the introduction is provided of an inner locking section bar, said inner locking section bar being arranged as an angle joint between the two profiled sections (8, 8') of said boards (7, 7').

7. Method according to claim 2, wherein outside a junction element (2) between two boards (7, 7') the introduction is provided of an outer section bar, said outer section bar stopping the outer space remaining open between the two boards (7, 7').

8. Method according to claims 6 and 7, wherein said inner section bar is connected to said outer section bar, the locking force tightening said boards (7, 7') towards each other, assuring the seal.

9. Device for locking convergent walls, in particular for dwelling modules for vehicles **characterised in that** it comprises:
- at least two boards (7, 7') having along an edge at least a profiled groove (10, 10'), said boards (7, 7') constituting said walls;
- junction elements (2) suitable for engaging in said grooves (10, 10') when said boards (7, 7') are arranged at a predetermined angle and with said grooves (10, 10') parallel and approached to each other, said junction elements (2) having means for quick locking in said grooves (10, 10').

10. Device for locking convergent walls according to claim 10, wherein said or each junction element (2) comprises at least two rods (6, 6') parallel to each other connected by transversal portions, said rods having (6, 6') cross section suitable for engaging in said profiled grooves (10, 10'), said rods (6, 6') being fastened in said profiled grooves (10, 10') by quick locking means.

11. Device for locking convergent walls according to claim 10, wherein said profiled grooves (10, 10') have an access opening that is wide as the size of said rods (6, 6'), and an inner undercut portion parallel to said access opening, each rod (6, 6') of said junction element (2) comprising at least a locking dog (12) movable between a first position in which said locking dog (12) conceals in each rod (6, 6') and a second position wherein said locking dog (12) protrudes from the surface of each rod (6, 6'), in said first position said locking dog (12) not impeding the free passage of said rod (6, 6') through the access opening of said profiled groove (10, 10'), in said second position said locking dog (12) being suitable for positively engaging in said inner undercut portion of said profiled groove (10, 10'), whereby said rod (6, 6') is locked in said profiled groove (10, 10').

12. Junction element (2) for connecting steadily through quick locking means at least two section bars in a predetermined mutual arrangement, **characterised in that** it comprises at least two rods (6, 6') parallel to each other connected by transversal portions, said rods (6, 6') having cross section suitable for engaging in a groove (10, 10') made in each section bar, said groove (10, 10') having an access opening that is wide as the size of the rods (6, 6') and an inner undercut portion parallel to said access opening, each rod (6, 6') of the junction element (2) having at least a locking dog (12) movable between a first position in which it conceals in the rod (6, 6') and a second position in which it protrudes from the surface of each rod (6, 6'), in said first position the locking dog (12) not impeding the free passage of the rod (6, 6') towards/away from the said access opening of the profiled groove (10, 10'), whereas in the second position the locking dog (12) being suitable for positively engaging in the inner undercut portion of the profiled groove (10, 10'), whereby each rod (6, 6') is locked in the respective profiled groove (10, 10').
